# EUROPEAN PATENT APPLICATION

(11) **EP 4 683 019 A1**
(43) Date of publication of application: **21.01.2026**
(21) Application number: 24865852.8
(22) Date of filing: 11.09.2024
(51) Int. Cl.: H01M 10/04, H01M 50/105, H01M 50/186

(54) **SECONDARY BATTERY AND SECONDARY BATTERY MANUFACTURING METHOD**

(30) Priority: 12.09.2023 KR 20230121139
(71) Applicant: LG Energy Solution, Ltd., Seoul 07335 (KR)
(72) Inventor: KIM, Jin Kyu, Daejeon 34122 (KR); KIM, Min Kyung, Daejeon 34122 (KR)
(74) Representative: Plasseraud IP
(86) International application number: PCT/KR2024/013834
(87) International publication number: WO 2025/058413

(57) **Abstract**

A method for manufacturing a secondary battery according to an embodiment of the present disclosure may include a first sealing step of sealing an edge of a pouch-type outer packaging by forming an edge sealing portion at the edge of the pouch-type outer packaging having an accommodation portion for accommodating an electrode assembly and a collection portion for collecting gases produced during charging and discharging of the electrode assembly, a degassing step of venting the gases collected in the collection portion during the charging and discharging of the electrode assembly to outside of the pouch-type outer packaging, and a second sealing step of forming a division sealing portion between the accommodation portion and the collection portion in the pouch-type outer packaging to divide the accommodation portion from the collection portion after the degassing step, wherein the first sealing step may further include forming an additional sealing portion extended from the edge sealing portion in a direction that runs between the accommodation portion and the collection portion, wherein the additional sealing portion may be disposed in the collection portion, spaced apart from the division sealing portion.

## Description

### TECHNICAL FIELD

### CROSS-REFERENCE TO RELATED APPLICATIONS

The present application claims priority to Korean Patent Application No. 10-2023-0121139 filed on September 12, 2023 in the Republic of Korea, the disclosure of which is incorporated herein by reference.

### TECHNICAL FIELD

Embodiments of the present disclosure relate to a secondary battery and a method for manufacturing a secondary battery.

### BACKGROUND ART

In general, as opposed to primary batteries that cannot be recharged, secondary batteries refer to rechargeable batteries, and are widely used in electronic devices including mobile phones, laptop computers and camcorders or electric vehicles.

Secondary batteries may be classified into cylindrical or prismatic batteries in which an electrode assembly is included in a cylindrical or prismatic metal can, and pouch-type batteries in which an electrode assembly is included in a pouch-type case of a laminate sheet, according to the shape of the battery case.

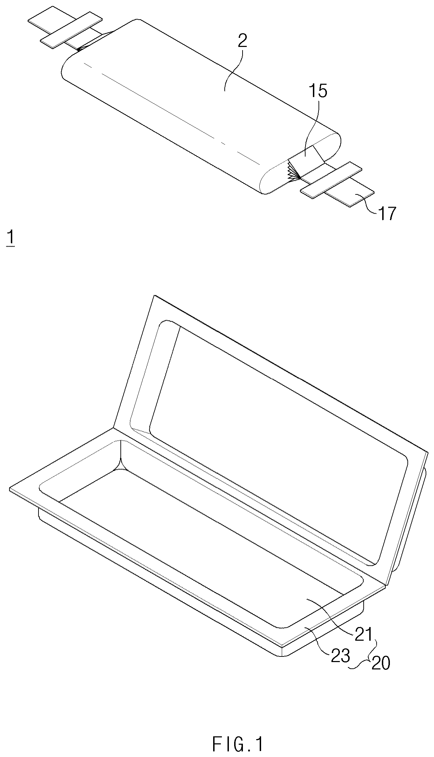

FIG. 1 is a diagram showing an example of a pouch-type secondary battery. The pouch-type secondary battery (a pouch-type cell) 1 includes an electrode assembly 2 formed by stacking an electrode and a separator in an alternating manner and a pouch-type outer packaging 20 accommodating the electrode assembly 2. Each of electrode tabs 15 may be connected to each of the electrodes of the electrode assembly 2. The electrode tabs 15 may be welded to each other at a predetermined area and then connected to an electrode lead 17 by welding. The outer packaging 20 includes an accommodation portion 21 (a cup portion) to accommodate the electrode assembly 2. The accommodation portion 21 of the outer packaging 20 may be formed by one or two recessed parts. FIG. 1 shows the accommodation portion 21 formed by two recessed parts. The outer packaging 20 may be manufactured through forming of a pouch film. A sealing portion 23 is formed around the accommodation portion 21 by sealing.

Meanwhile, active gases may be produced in the process of charging and discharging the electrode assembly to activate the secondary battery. The active gases may increase the internal pressure of the pouch-type outer packaging and stresses may focus on a specific region of the pouch-type outer packaging. This may cause deformation, cracks and wrinkles in the specific region of the pouch-type outer packaging. When deformation occurs in the pouch-type outer packaging, insulation performance of the pouch-type outer packaging may be degraded. To solve these problems, forming the sealing portion at a plurality of regions of the pouch-type outer packaging may be contemplated. However, it may result in overlap between the sealing portions, and rather, the overlap of the sealing portions may degrade sealing performance of the sealing portions.

### DISCLOSURE OF THE INVENTION

### TECHNICAL PROBLEM

Embodiments of the present disclosure are directed to providing a secondary battery in which in the event that the internal pressure of a pouch-type outer packaging increases due to gases produced in an activation process, deformation, cracks and wrinkles in a specific region of the pouch-type outer packaging may be prevented, thereby preventing insulation performance degradation of the pouch-type outer packaging and a method for manufacturing the secondary battery.

Embodiments of the present disclosure are further directed to providing a secondary battery in which deformation caused by the increased internal pressure in the specific region of the pouch-type outer packaging may be prevented, and sealing performance degradation caused by overlap of sealing portions may be prevented and a method for manufacturing the secondary battery.

### TECHNICAL SOLUTION

In an example, a method for manufacturing a secondary battery may include a first sealing step of sealing an edge of a pouch-type outer packaging by forming an edge sealing portion at the edge of the pouch-type outer packaging having an accommodation portion for accommodating an electrode assembly and a collection portion for collecting gases produced during charging and discharging of the electrode assembly, a degassing step of venting the gases collected in the collection portion during the charging and discharging of the electrode assembly to outside of the pouch-type outer packaging, and a second sealing step of forming a division sealing portion between the accommodation portion and the collection portion in the pouch-type outer packaging to divide the accommodation portion from the collection portion after the degassing step, wherein the first sealing step may further include forming an additional sealing portion extended from the edge sealing portion in a direction that runs between the accommodation portion and the collection portion, wherein the additional sealing portion may be disposed in the collection portion, spaced apart from the division sealing portion.

In another example, the additional sealing portion may be disposed such that the additional sealing portion does not overlap the division sealing portion.

In another example, the additional sealing portion may include a curved part extended from the edge sealing portion and concavely formed in a curved shape defined with a predetermined radius from a predetermined point apart from the additional sealing portion toward the accommodation portion in the pouch-type outer packaging.

In another example, a distance between the additional sealing portion and the division sealing portion, in a direction perpendicular to an extension direction of the division sealing portion, may be equal to or more than half of the radius of the curved part and may be equal to or less than the radius.

In another example, when a length of the additional sealing portion defined in an extension direction of the additional sealing portion is E, a length of the pouch-type outer packaging defined in a direction corresponding to the extension direction of the additional sealing portion is L, and the radius of the curved part is R, 0.06*L - 2*R <= E <= 0.06*L may be satisfied.

In another example, the edge sealing portion may include a first horizontal portion disposed at a side where an electrode lead electrically connected to the electrode assembly is extended and formed in a horizontal direction perpendicular to a direction in which the electrode lead is extended, a first extension portion extended from an end of the first horizontal portion located closer to the collection portion among two ends of the first horizontal portion over the accommodation portion in a direction facing away from the first horizontal portion, a second extension portion extended from an end of the first extension portion at an angle in an outward direction of the pouch-type outer packaging along a direction horizontally facing away from the first extension portion, and a second horizontal portion extended from an end of the second extension portion in a direction horizontally facing away from the second extension portion.

In another example, the first extension portion may include an inclined extension portion extended from the end of the first horizontal portion at an angle in an inward direction of the pouch-type outer packaging along the direction horizontally facing away from the first horizontal portion, and a horizontal extension portion extended from an end of the inclined extension portion in a direction horizontally facing away from the inclined extension portion.

In another example, the edge sealing portion may further include a third extension portion extended from an opposite end of the first horizontal portion located farther away from the collection portion among the two ends of the first horizontal portion at an angle in an inward direction of the pouch-type outer packaging along the direction horizontally facing away from the first horizontal portion.

In another example, a connection point of the additional sealing portion and the edge sealing portion may be located in the first extension portion and the second extension portion.

In another example, a secondary battery may include a pouch-type outer packaging having an accommodation portion for accommodating an electrode assembly, and a collection portion for collecting gases produced during charging and discharging of the electrode assembly, an edge sealing portion configured to seal an edge of the pouch-type outer packaging, a division sealing portion configured to form a seal between the accommodation portion and the collection portion in the pouch-type outer packaging to divide the accommodation portion from the collection portion, and an additional sealing portion configured to seal a predetermined area of the collection portion in the pouch-type outer packaging, wherein the additional sealing portion may be extended from the edge sealing portion in a direction corresponding to an extension direction of the division sealing portion, and may be spaced apart from the division sealing portion.

In another example, the additional sealing portion may be disposed such that the additional sealing portion does not overlap the division sealing portion.

In another example, the additional sealing portion may include a curved part extended from the edge sealing portion, and concavely formed in a curved shape defined with a predetermined radius from a predetermined point apart from the additional sealing portion toward the accommodation portion in the pouch-type outer packaging.

In another example, a distance between the additional sealing portion and the division sealing portion, in a direction perpendicular to the extension direction of the division sealing portion, may be equal to or more than half of the radius of the curved part and may be equal to or less than the radius.

In another example, when a length of the additional sealing portion defined in an extension direction of the additional sealing portion from the edge sealing portion is E, a length of the pouch-type outer packaging defined in a direction corresponding to the extension direction of the additional sealing portion is L, and the radius of the curved part is R, 0.06*L - 2*R <= E <= 0.06*L may be satisfied.

### ADVANTAGEOUS EFFECTS

According to an embodiment of the present disclosure, it may be possible to increase the mechanical rigidity of the pouch-type outer packaging through the additional sealing portion, thereby reducing or preventing deformation, cracks and wrinkles in the specific region of the pouch-type outer packaging in the event that the internal pressure of the pouch-type outer packaging increases due to gases produced in the activation process, and through this, preventing insulation performance degradation of the pouch-type outer packaging.

Additionally, according to an embodiment of the present disclosure, it may be possible to reduce or prevent sealing performance degradation caused by overlap of the sealing portions by placing the additional sealing portion apart from the division sealing portion.

### BRIEF DESCRIPTION OF THE DRAWINGS

FIG. 1 is a diagram showing an example of a pouch-type secondary battery.
FIGS. 2 to 6 are plan views illustrating a method for manufacturing a secondary battery according to Embodiment 1 of the present disclosure in a sequential order.
FIG. 7 is a cross-sectional view showing a stack structure of the pouch-type outer packaging of FIG. 2.
FIG. 8 is a plan view illustrating a secondary battery according to Embodiment 2 of the present disclosure.

### DETAILED DESCRIPTION

Hereinafter, the exemplary embodiments of the present disclosure will be described in sufficient detail with reference to the accompanying drawings to enable persons having ordinary skill in the technical field pertaining to the present disclosure to easily carry out the present disclosure. However, the present disclosure may be embodied in many different forms and is not limited or restricted by the following embodiments.

To clearly describe the present disclosure, an irrelevant description or a detailed description of related known technology that may unnecessarily obscure the gist of the present disclosure is omitted, and in affixing the reference numerals to the elements in each drawing, the identical or similar reference numerals are affixed to the identical or similar elements throughout the specification.

Additionally, the terms or words used in the specification and the appended claims should not be construed as limited to general and dictionary meanings, but rather interpreted based on the meanings and concepts corresponding to the technical aspect of the present disclosure on the basis of the principle that the inventor is allowed to define the terms appropriately for the best explanation.

### Embodiment 1

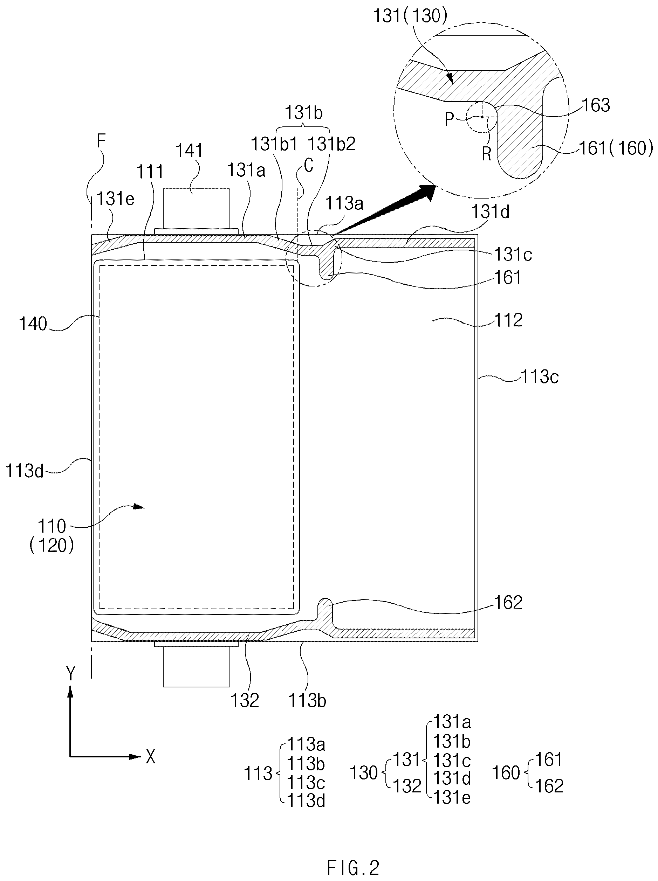

Hereinafter, a method for manufacturing a secondary battery according to Embodiment 1 of the present disclosure will be described in a sequential order with reference to FIGS. 2 to 6. FIGS. 2 to 6 are plan views illustrating the method for manufacturing the secondary battery according to Embodiment 1 of the present disclosure in a sequential order. For reference, the description of Embodiment 1 may be equally applied to the following embodiment so long as there is no contradiction between them.

### Preparation of pouch-type outer packaging

First, a pouch-type outer packaging 110 may be prepared. The pouch-type outer packaging 110 may be prepared in a folded form of a single outer packaging sheet 120. Alternatively, the pouch-type outer packaging may be prepared in a stacked form of two outer packaging sheets, facing each other. FIG. 2 shows the pouch-type outer packaging 110 formed in a folded form of the single outer packaging sheet 120 along a predetermined reference line F (see the pouch-type outer packaging of FIG. 1).

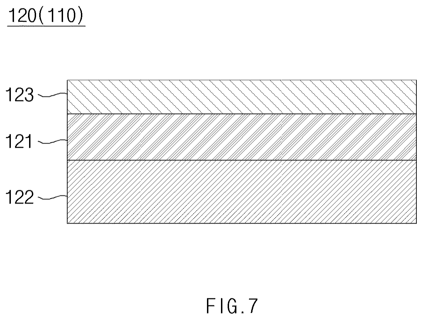

The outer packaging sheet 120 may be a laminate sheet including a metal layer 121 and resin layers 122, 123 stacked on the metal layer 121 as shown in FIG. 7. The metal layer 121 may include a layer of aluminum or a layer of stainless steel. The resin layers may include the first resin layer 122 disposed on the inner surface of the metal layer 121. The first resin layer 122 may be a layer formed from polypropylene (PP) or polyphthalamide (PPA). High insulation and corrosion resistance may be required for the first resin layer 122, and the first resin layer 122 may be formed from other resin that meets these requirements. The resin layers may include the second resin layer 123 on the outer surface of the metal layer 121. The second resin layer 123 may be a layer formed from polyethylene terephthalate (PET). Protection and insulation of the secondary battery may be required for the second resin layer 123, and the second resin layer 123 may be formed from other resin that meets these requirements.

The pouch-type outer packaging 110 may include an accommodation portion 111 for accommodating an electrode assembly 140 as shown in FIG. 2. The accommodation portion 111 may be preformed in the outer packaging sheet 120. For example, a predetermined space for accommodating the electrode assembly 140 may be preformed in a predetermined part of the outer packaging sheet 120 by applying pressure to the outer packaging sheet 120 with a punch so that the predetermined part of the outer packaging sheet 120 is recessed inwards. In a state that the electrode assembly 140 is accommodated in the accommodation portion 111 of the outer packaging sheet 120, when the outer packaging sheet 120 is folded along the predetermined reference line F, the pouch-type outer packaging 110 of FIG. 2 (before an edge sealing portion as described below is formed) may be prepared.

The pouch-type outer packaging 110 may include a collection portion 112 for collecting gases. During charging and discharging of the electrode assembly 140 to activate the secondary battery, gases may be produced. The collection portion 112 may include a predetermined space that is in communication with the accommodation portion 111 to collect the gases. The predetermined space of the collection portion 112 may be formed by a space between facing parts of the folded outer packaging sheet 120 without any forming process. The collection portion 112 may refer to a part of the pouch-type outer packaging 110 located at the right side of the accommodation portion 111 in FIG. 2.

For reference, the electrode assembly 140 may be formed by stacking an electrode and a separator in an alternating manner. The electrode may include a positive electrode and a negative electrode. The electrode assembly 140 may have an electrode tab connected to the electrode. The electrode tab may be separately formed, and may be formed as a part of a current collector of the electrode. The electrode tabs may be welded to each other at a predetermined area and then connected to an electrode lead 141 by welding.

### Edge sealing of pouch-type outer packaging

Subsequently, as shown in FIG. 2, the edge sealing portion 130; 131, 132 may be formed in an upper edge region 113a and a lower edge region 113b of the pouch-type outer packaging 110, respectively. Through this, each of the upper edge region 113a and the lower edge region 113b of the pouch-type outer packaging 110 may be sealed. The sealing may be done in a manner of attaching the resin layers 122 (see FIG. 7) of the outer packaging sheet 120, facing each other, by heat fusion, or coupling the metal layers 121 of the outer packaging sheet 120, facing each other (to this end, removing the resin layer may be necessary) by welding. Hereinafter, other sealing may be done in the same way. For reference, a specific direction described in the present disclosure is a relative concept and may change depending on viewing direction. For example, the upper side and the lower side may be a left side and a right side depending on viewing direction.

In FIG. 2, a right edge region 113c of the pouch-type outer packaging 110 may be open. This may be used as an opening for injecting an electrolyte solution as described below. In FIG. 2, a left edge region 113d of the pouch-type outer packaging 110 is a folded region, and may not need the edge sealing portion 130 for sealing.

The upper edge sealing portion 131 formed in the upper edge region 113a of the pouch-type outer packaging 110 may include a first horizontal portion 131a disposed at a side where the electrode lead 141 electrically connected to the electrode assembly 140 is extended. The first horizontal portion 131a may be formed in the horizontal direction (see X direction) perpendicular to the extension direction (see Y direction) of the electrode lead 141. In the present disclosure, horizontal and perpendicular may include generally horizontal and generally perpendicular.

The upper edge sealing portion 131 may include a first extension portion 131b extended from one end of the first horizontal portion 131a located closer to the collection portion 112 among two ends of the first horizontal portion 131a in a direction (for example, X direction in FIG. 2) facing away from the first horizontal portion 131a. The first extension portion 131b may be extended over the accommodation portion 111. For example, the first extension portion 131b may be extended to the right side of a boundary line C set to correspond to the right edge of the accommodation portion 111 in FIG. 2.

The first extension portion 131b may include an inclined extension portion 131b1 extended at an angle from the end of the first horizontal portion 131a. The inclined extension portion 131b1 may be extended at an angle in the inward direction (for example, see downward direction in FIG. 2) of the pouch-type outer packaging 110 along the direction (see X direction) horizontally facing away from the first horizontal portion 131a. The first extension portion 131b may include a horizontal extension portion 131b2 extended from an end of the inclined extension portion 131b1. The horizontal extension portion 131b2 may be extended in a direction (for example, X direction) horizontally facing away from the inclined extension portion 131b1. The first extension portion may be formed at an angle as a whole without the horizontal extension portion 131b2.

The upper edge sealing portion 131 may include a second extension portion 131c extended at an angle from an end of the first extension portion 131b (an end of the horizontal extension portion in FIG. 2). The second extension portion 131c may be extended at an angle in the outward direction (for example, upward direction in FIG. 2) of the pouch-type outer packaging 110 along a direction horizontally facing away from the first extension portion 131b.

The upper edge sealing portion 131 may include a second horizontal portion 131d extended from an end of the second extension portion 131c. The second horizontal portion 131d may be extended in a direction horizontally facing away from the second extension portion 131c. The second horizontal portion 131d may be located lower than the first horizontal portion 131a.

The upper edge sealing portion 131 may include a third extension portion 131e extended at an angle from the opposite end of the first horizontal portion 131a located farther away from the collection portion 112 among two ends of the first horizontal portion 131a. The third extension portion 131e may be extended at an angle in the inward direction (for example, downward direction in FIG. 2) of the pouch-type outer packaging 110 along a direction horizontally facing away from the first horizontal portion 131a.

In the case of the pouch-type outer packaging of this embodiment, the outer part of the first extension portion 131b or the outer part of the third extension portion 131e in the pouch-type outer packaging may be removed. A predetermined component (for example, a bolt) of a module or a pack in which the secondary battery is placed may be disposed in a space (not occupied by the pouch-type outer packaging) formed by the removal. Through this, energy density of the module or pack may be improved. The manufacturing method of this embodiment may improve energy density of the module or pack to which the secondary battery manufactured by this embodiment is applied and prevent insulation performance degradation of the pouch-type outer packaging as described below.

The lower edge sealing portion 132 formed in the lower edge region 113b of the pouch-type outer packaging 110 may be symmetrical to the upper edge sealing portion 131.

Subsequently, the electrolyte solution may be injected into the pouch-type outer packaging 110. The open right edge region 113c of the pouch-type outer packaging 110 may be used to inject the electrolyte solution.

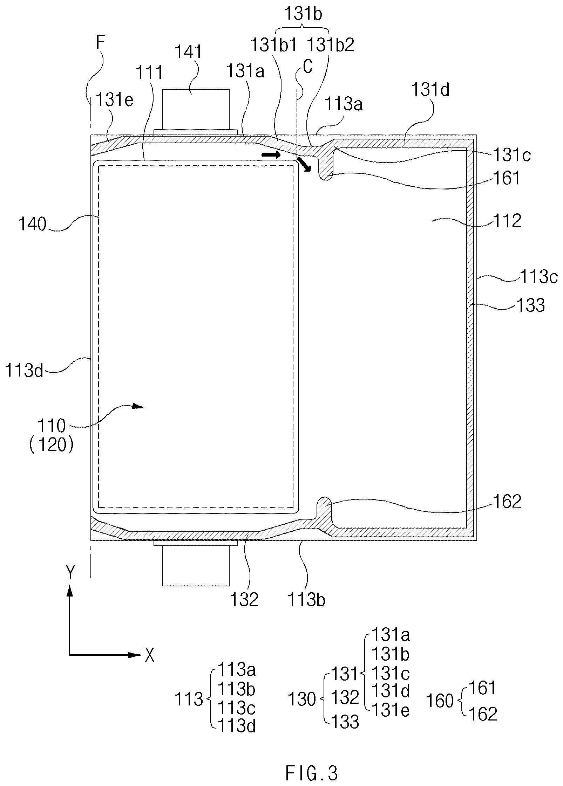

Subsequently, as shown in FIG. 3, a right edge sealing portion 133 may be formed in the right edge region 113c of the pouch-type outer packaging 110. Through this, the open right edge region 113c may be sealed. The edge sealing portion 130 of this embodiment may include the right edge sealing portion 133 together with the upper and lower edge sealing portions 131, 132.

### Venting of collected gases (degassing)

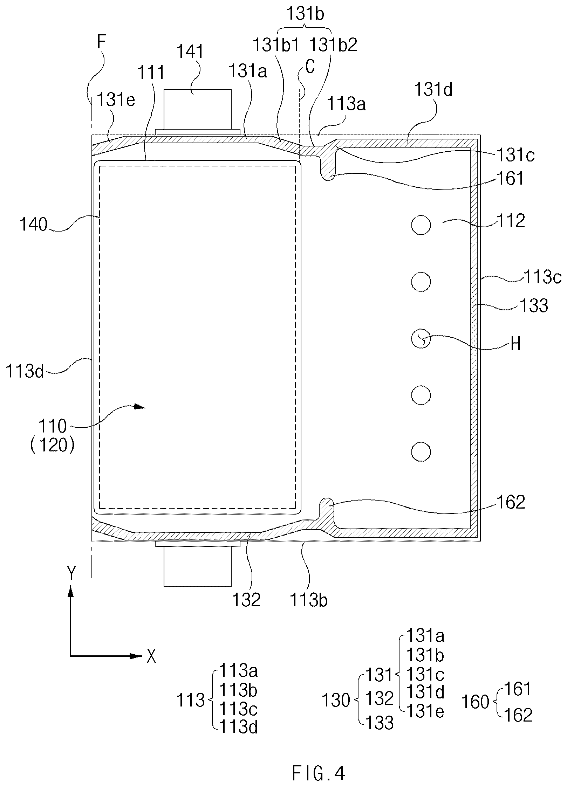

Subsequently, gases collected in the collection portion 112 during charging and discharging of the electrode assembly 140 may be vented to the outside of the pouch-type outer packaging 110. The electrode assembly 140 may be activated by charging and discharging through the electrode lead 141 exposed to the outside of the pouch-type outer packaging 110, and gases may be produced in the activation process. The produced gases may move from the accommodation portion 111 to the collection portion 112 and be collected in the collection portion 112. To vent the collected gases, the pouch-type outer packaging 110 may have a hole H as shown in FIG. 4. The gases collected in the collection portion 112 may be vented to the outside of the pouch-type outer packaging 110 through the hole H. To accelerate the gas venting, the gas venting may be carried out in a state that the pouch-type outer packaging 110 is placed in a negative pressure chamber (not shown) .

### Formation of division sealing portion

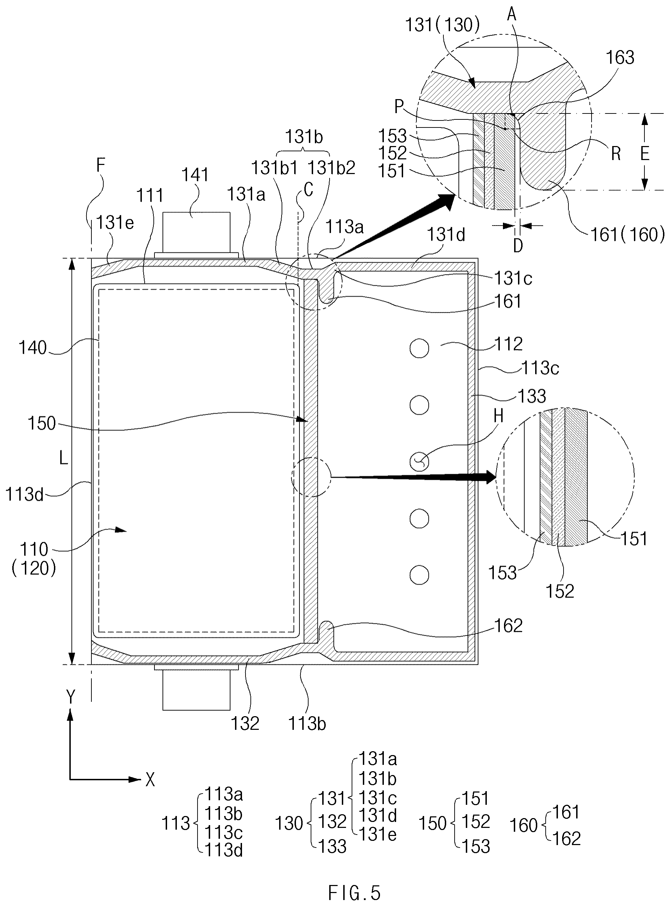

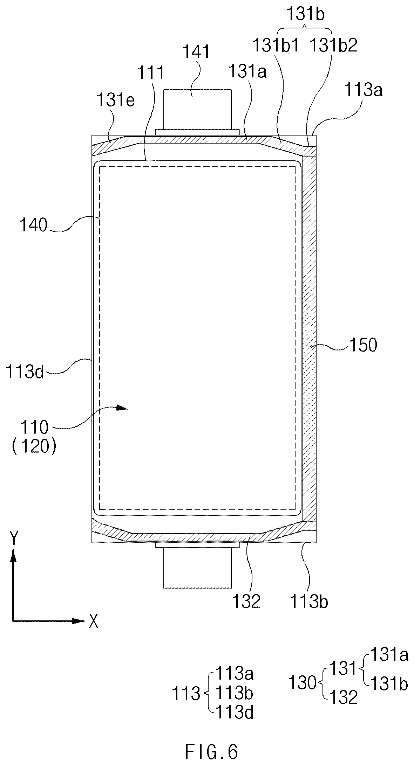

Subsequently, as shown in FIG. 5, a division sealing portion 150 may be formed between the accommodation portion 111 and the collection portion 112 in the pouch-type outer packaging 110. The collection portion 112 may be removed after degassing, and before the removal, it is necessary to divide the accommodation portion 111 from the collection portion 112, and to this end, the division sealing portion 150 may be formed. After the formation of the division sealing portion 150, when the part of the pouch-type outer packaging 110 at the right side of the division sealing portion 150 is removed, the final product of the secondary battery as shown in FIG. 6 may be prepared.

The division sealing portion 150 may include a sealing region 151 where sealing is actually done as shown in FIG. 5. The sealing region 151 may be a part of the division sealing portion 150 disposed farthest away from the accommodation portion 111. The sealing region 151 may be, for example, approximately 5 mm in width.

The division sealing portion 150 may include a temporary attachment region 152 disposed next to the sealing region 151. The process of forming the sealing portion may be described as a process of melting the resin layer 122 (see FIG. 7) of the pouch-type outer packaging 110 by heat and pressure and hardening again, and in this process, the resin layer 122 of a predetermined part (that will become the sealing region later) of the pouch-type outer packaging 110 may be melted and flow near the predetermined part, to form the temporary attachment region 152 next to the sealing region 151. The temporary attachment region 152 may be, for example, approximately 2 mm in width.

The division sealing portion 150 may include an unsealing region 153 disposed next to the temporary attachment region 152. The unsealing region 153 may be where sealing is not done, so the facing parts of the outer packaging sheet 120 do not attach to each other. The division sealing portion 150 may be folded toward the accommodation portion 111 after the removal of the collection portion 112. This folding may reduce the space occupied by the secondary battery, thereby improving volumetric energy density of the secondary battery. The unsealing region 153 of the division sealing portion 150 may be configured to allow the folding of the division sealing portion 150. In case the unsealing region 153 is insufficient for folding and folding takes place in the temporary attachment region 152, a seal may not be normally formed in the temporary attachment region 152, causing sealing break. The unsealing region 153 may be, for example, approximately 2 mm in width.

### Formation of additional sealing portion

Meanwhile, as shown in FIG. 2, in addition to the edge sealing portion 130, an additional sealing portion 160 may be further formed. The additional sealing portion 160 may be a sealing portion extended from the edge sealing portion 130, and may be extended in a direction that runs between the accommodation portion 111 and the collection portion 112. For example, the additional sealing portion 160 may be extended in a direction generally corresponding to the extension direction of the division sealing portion 150 which is formed after the formation of the additional sealing portion 160. FIG. 2 shows the additional sealing portion 160 formed in the up-down direction or the direction in which the electrode lead 141 is exposed. The additional sealing portion 160 may include an additional upper sealing portion 161 formed from the upper edge sealing portion 131 toward the lower edge sealing portion 132, and an additional lower sealing portion 162 formed from the lower edge sealing portion 132 toward the upper edge sealing portion 131.

The additional sealing portion 160 may be formed during the formation of the edge sealing portion 130, or before or after the formation of the edge sealing portion 130. As shown in FIG. 2, the additional sealing portion 160 may be extended directly from the edge sealing portion 130, and may be extended at a distance from the edge sealing portion 130. When the additional sealing portion 160 is extended directly from the edge sealing portion 130, a connection point of the additional sealing portion 160 and the edge sealing portion 130 may be located at the first extension portion 131b and the second extension portion 131c. For example, the connection point may be located at the first extension portion 131b or the second extension portion 131c, or may be located across them. In FIG. 5, the connection point is located across the horizontal extension portion 131b2 of the first extension portion 131b and the second extension portion 131c.

The gases produced in the activation process may increase the internal pressure of the pouch-type outer packaging 110 and stresses may focus on a specific region of the pouch-type outer packaging 110. This may cause deformation, cracks and wrinkles in the specific region of the pouch-type outer packaging 110. The manufacturing method of this embodiment may include forming the additional sealing portion 160 between the accommodation portion 111 and the collection portion 112 to increase the mechanical rigidity of the pouch-type outer packaging 110, thereby reducing or preventing the above-described problem. When deformation does not occur in the pouch-type outer packaging 110, insulation performance degradation caused by deformation may not occur.

Meanwhile, as shown in FIG. 5, the additional sealing portion 160 may be disposed apart from the division sealing portion 150 (see distance D). The overlap of the sealing portions may cause sealing performance degradation. For example, when a sealed part formed by applying heat and pressure undergoes heat and pressure again, the primary sealing may be weakened by the subsequent heat and pressure. In the case of this embodiment, to prevent this problem, the additional sealing portion 160 may be disposed apart from the division sealing portion 150.

The additional sealing portion 160 may be, for example, disposed at the collection portion 112 side of the pouch-type outer packaging 110, i.e., at the right side of the accommodation portion 111 in FIG. 5.

The additional sealing portion 160 may be, for example, spaced apart from the accommodation portion 111 by approximately 11 mm in the X direction of FIG. 5. The width (defined in X direction in FIG. 5) of the additional sealing portion 160 may be, for example, approximately 10 mm. The length (see E in FIG. 5) of the additional sealing portion 160 may be, for example, approximately 15 mm. The length of the additional sealing portion 160 of approximately 8.5 mm or approximately 2.5 mm may be contemplated.

Meanwhile, as shown in FIG. 2, the additional sealing portion 160 may include a curved part 163 extended from the edge sealing portion 130. The curved part 163 may be a concave part formed in a curved shape defined with a predetermined radius R from a predetermined point P in the pouch-type outer packaging 110. The predetermined point P is a point in the pouch-type outer packaging 110, and may be a predefined point apart from the additional sealing portion 160 toward the accommodation portion 111. FIG. 2 shows the curved part 163 defined as a quadrant drawn around the predetermined point P.

In case the additional sealing portion 160 does not include the curved part 163 and is vertically extended from the edge sealing portion 130, when the internal pressure of the pouch-type outer packaging 110 increases due to gases produced in the activation process, stresses may focus on the vertical part, causing damage to the sealing portion or the pouch-type outer packaging 110. Additionally, to form the vertical part, it is necessary to vertically form a sealing tool, and the vertical part of the sealing tool may cause damage to the pouch-type outer packaging 110 due to its sharp shape. To prevent these problems, in this embodiment, the additional sealing portion 160 may include the curved part 163.

The following description is made with reference to FIG. 5. As the additional sealing portion 160 is configured to suppress deformation in the accommodation portion 111 of the pouch-type outer packaging 110, the additional sealing portion 160 may be disposed adjacent to the accommodation portion 111. However, in case the additional sealing portion 160 is disposed too close to the accommodation portion 111, the additional sealing portion 160 and the division sealing portion 150 may overlap. Additionally, in case the additional sealing portion 160 is disposed too close to the accommodation portion 111, a flow channel (see the arrow in FIG. 3) formed between the additional sealing portion 160 and the accommodation portion 111 may be overly narrow, causing damage to the sealing portion while gases produced in the activation process move to the collection portion 112.

In view of the foregoing, the distance D between the additional sealing portion 160 and the division sealing portion 150 may be equal to or more than half of the radius R of the curved part 163 and equal to or less than the radius R. When the distance between the additional sealing portion 160 and the division sealing portion 150 is D, and the radius of the curved part 163 is R, R/2 <= D <= R may be satisfied. For example, when R is 4 mm, the minimum value of D may be 2 mm.

When the distance D is R/2, a partial overlap (see the shaded section A) may occur between the additional sealing portion 160 and the division sealing portion 150 as shown in FIG. 5. However, it was experimentally confirmed that the overlapping area is so narrow that problem scarcely occurs. Additionally, when the distance D is larger than R, the additional sealing portion 160 is too far away from the accommodation portion 111 to suppress deformation in the accommodation portion 111. For reference, when the additional sealing portion 160 and the division sealing portion 150 are extended in the same direction, the distance D between the additional sealing portion 160 and the division sealing portion 150 may be measured in the direction (X direction in FIG. 5) perpendicular to the extension direction.

Although FIG. 5 shows the partial overlap between the additional sealing portion 160 and the division sealing portion 150, the additional sealing portion 160 may be disposed such that the additional sealing portion 160 does not overlap the division sealing portion 150.

Meanwhile, when the length of the additional sealing portion 160 is E, the length of the pouch-type outer packaging 110 is L, and the radius of the curved part 163 of the additional sealing portion 160 is R, 0.06*L - 2*R <= E <= 0.06*L may be satisfied. The length E of the additional sealing portion 160 may be defined in the extension direction (see the up-down direction in FIG. 5) of the additional sealing portion 160. Additionally, the length E of the additional sealing portion 160 may be measured at the side adjacent to the division sealing portion 150. The length L of the pouch-type outer packaging 110 may be defined in the direction corresponding to the extension direction of the additional sealing portion 160. In FIG. 5, the length of the pouch-type outer packaging 110 may be defined in the up-down direction or the direction in which the electrode lead 141 is exposed.

To suppress deformation in the accommodation portion 111, the longer length of the additional sealing portion 160, the better. However, when the length of the additional sealing portion 160 is overly long, the movement of gases produced in the activation process from the accommodation portion 111 to the collection portion 112 may be obstructed. Considering the foregoing, the length of the additional sealing portion 160 may be determined. When the length of the additional sealing portion 160 is smaller than '0.06*L - 2*R', the effect of suppressing deformation in the accommodation portion 111 may decline. When the length of the additional sealing portion 160 is larger than '0.06*L', the movement of gases to the collection portion 112 may be obstructed.

### Secondary battery

When the secondary battery is manufactured through the above-described process, the secondary battery (intermediate product) may be manufactured as shown in FIG. 5. The secondary battery of FIG. 5 may include the pouch-type outer packaging 110 having the accommodation portion 111 and the collection portion 112, the edge sealing portion 130 sealing the edge of the pouch-type outer packaging 110, the division sealing portion 150 forming a seal between the accommodation portion 111 and the collection portion 112 of the pouch-type outer packaging 110, and the additional sealing portion 160 sealing the predetermined area of the collection portion 112 of the pouch-type outer packaging 110. The additional sealing portion 160 may be extended from the edge sealing portion 130 in the direction corresponding to the extension direction of the division sealing portion 150, and be spaced apart from the division sealing portion 150. The part of the pouch-type outer packaging 110 located at the collection portion 112 side of the division sealing portion 150 may be removed after the degassing process. Through this, the secondary battery (final product) as shown in FIG. 6 may be manufactured.

### Embodiment 2

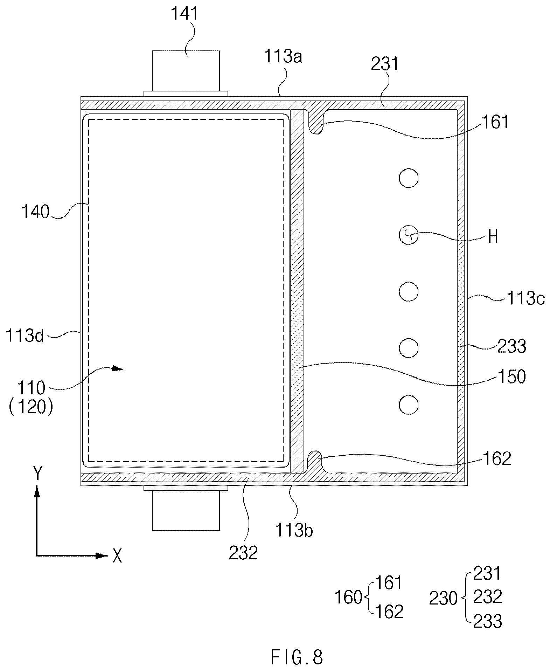

FIG. 8 is a plan view illustrating the secondary battery (intermediate product) according to Embodiment 2 of the present disclosure. The secondary battery according to this embodiment is different from the secondary battery of Embodiment 1 in the shape of the edge sealing portion and the following description is made based on the difference. For reference, the description of Embodiment 2 may be equally applied to the above-described embodiment so long as there is no contradiction between them.

The secondary battery according to this embodiment includes the edge sealing portion 230 linearly formed as shown in FIG. 8. The upper and lower edge sealing portions 231, 232 of FIG. 8 may be linearly formed in a direction perpendicular to the up-down direction or the direction in which the electrode lead 141 is exposed. The right edge sealing portion 233 may be linearly formed in the up-down direction.

The method for manufacturing the secondary battery of Embodiment 1 may be applied irrespective of the shape of the edge sealing portion. For example, the manufacturing method of Embodiment 1 may be also applied to the process of manufacturing the secondary battery of FIG. 8.

The foregoing description has been made to describe the technical aspect of the present disclosure by way of example, and persons having ordinary skill in the technical field pertaining to the present disclosure would have made a variety of modifications and changes without departing from the essential features of the present disclosure.

Therefore, the disclosed embodiments are provided to describe the technical aspect of the present disclosure and not intended to be limiting, and the technical scope of the present disclosure is not limited by these embodiments.

The scope of protection of the present disclosure should be interpreted by the appended claims, and it should be interpreted that all the technical spirit within the equivalent scope is included in the scope of protection of the present disclosure.

## Claims

1. A method for manufacturing a secondary battery, the method comprising:
a first sealing step of sealing an edge of a pouch-type outer packaging by forming an edge sealing portion at the edge of the pouch-type outer packaging having an accommodation portion for accommodating an electrode assembly and a collection portion for collecting gases produced during charging and discharging of the electrode assembly;
a degassing step of venting the gases collected in the collection portion during the charging and discharging of the electrode assembly to outside of the pouch-type outer packaging; and
a second sealing step of forming a division sealing portion between the accommodation portion and the collection portion in the pouch-type outer packaging to divide the accommodation portion from the collection portion after the degassing step,
wherein the first sealing step further comprises:
forming an additional sealing portion extended from the edge sealing portion in a direction that runs between the accommodation portion and the collection portion, wherein the additional sealing portion is disposed in the collection portion, spaced apart from the division sealing portion.

2. The method for manufacturing the secondary battery according to claim 1,
wherein the additional sealing portion is disposed such that the additional sealing portion does not overlap the division sealing portion.

3. The method for manufacturing the secondary battery according to claim 1,
wherein the additional sealing portion includes a curved part extended from the edge sealing portion and concavely formed in a curved shape defined with a predetermined radius from a predetermined point apart from the additional sealing portion toward the accommodation portion in the pouch-type outer packaging.

4. The method for manufacturing the secondary battery according to claim 3,
wherein a distance between the additional sealing portion and the division sealing portion, in a direction perpendicular to an extension direction of the division sealing portion, is equal to or more than half of the radius of the curved part and is equal to or less than the radius.

5. The method for manufacturing the secondary battery according to claim 3,
wherein when a length of the additional sealing portion defined in an extension direction of the additional sealing portion is E, a length of the pouch-type outer packaging defined in a direction corresponding to the extension direction of the additional sealing portion is L, and the radius of the curved part is R, 0.06*L - 2*R <= E <= 0.06*L is satisfied.

6. The method for manufacturing the secondary battery according to claim 1,
wherein the edge sealing portion includes:
a first horizontal portion disposed at a side where an electrode lead electrically connected to the electrode assembly is extended and formed in a horizontal direction perpendicular to a direction in which the electrode lead is extended;
a first extension portion extended from an end of the first horizontal portion located closer to the collection portion among two ends of the first horizontal portion over the accommodation portion in a direction facing away from the first horizontal portion;
a second extension portion extended from an end of the first extension portion at an angle in an outward direction of the pouch-type outer packaging along a direction horizontally facing away from the first extension portion; and
a second horizontal portion extended from an end of the second extension portion in a direction horizontally facing away from the second extension portion.

7. The method for manufacturing the secondary battery according to claim 6,
wherein the first extension portion includes:
an inclined extension portion extended from the end of the first horizontal portion at an angle in an inward direction of the pouch-type outer packaging along the direction horizontally facing away from the first horizontal portion; and
a horizontal extension portion extended from an end of the inclined extension portion in a direction horizontally facing away from the inclined extension portion.

8. The method for manufacturing the secondary battery according to claim 6,
wherein the edge sealing portion further includes:
a third extension portion extended from an opposite end of the first horizontal portion located farther away from the collection portion among the two ends of the first horizontal portion at an angle in an inward direction of the pouch-type outer packaging along the direction horizontally facing away from the first horizontal portion.

9. The method for manufacturing the secondary battery according to claim 6,
wherein a connection point of the additional sealing portion and the edge sealing portion is located in the first extension portion and the second extension portion.

10. A secondary battery comprising:
a pouch-type outer packaging having an accommodation portion for accommodating an electrode assembly, and a collection portion for collecting gases produced during charging and discharging of the electrode assembly;
an edge sealing portion configured to seal an edge of the pouch-type outer packaging;
a division sealing portion configured to form a seal between the accommodation portion and the collection portion in the pouch-type outer packaging to divide the accommodation portion from the collection portion; and
an additional sealing portion configured to seal a predetermined area of the collection portion in the pouch-type outer packaging,
wherein the additional sealing portion is extended from the edge sealing portion in a direction corresponding to an extension direction of the division sealing portion, and is spaced apart from the division sealing portion.

11. The secondary battery according to claim 10,
wherein the additional sealing portion is disposed such that the additional sealing portion does not overlap the division sealing portion.

12. The secondary battery according to claim 10,
wherein the additional sealing portion includes:
a curved part extended from the edge sealing portion, and concavely formed in a curved shape defined with a predetermined radius from a predetermined point apart from the additional sealing portion toward the accommodation portion in the pouch-type outer packaging.

13. The secondary battery according to claim 12,
wherein a distance between the additional sealing portion and the division sealing portion, in a direction perpendicular to the extension direction of the division sealing portion, is equal to or more than half of the radius of the curved part and is equal to or less than the radius.

14. The secondary battery according to claim 12,
wherein when a length of the additional sealing portion defined in an extension direction of the additional sealing portion from the edge sealing portion is E, a length of the pouch-type outer packaging defined in a direction corresponding to the extension direction of the additional sealing portion is L, and the radius of the curved part is R, 0.06*L - 2*R <= E <= 0.06*L is satisfied.
